# EUROPEAN PATENT SPECIFICATION

(11) **EP 0 376 948 B1**
(45) Date of publication and mention of the grant of the patent: **17.03.1993**
(21) Application number: 88904982.1
(22) Date of filing: 25.05.1988
(51) Int. Cl.: H01G 4/40, H01F 31/00

(54) **WOUND CAPACITOR DEVICE WITH CONTROLLED IMPEDANCE**
AUFGEWICKELTES KAPAZITÄTSBAUELEMENT MIT KONTROLLIERTER IMPEDANZ
DISPOSITIF A CONDENSATEUR BOBINE AVEC COMMANDE DE L'IMPEDANCE

(30) Priority: 18.11.1987 IT 8349087; 18.11.1987 IT 8349187
(43) Date of publication of application: 11.07.1990
(73) Proprietor: DUCATI ENERGIA S.p.A., 40132 Bologna (IT)
(72) Inventor: BIONDI, Astorre, I-40132 Bologna (IT); REGAZZI, Gianni, I-40132 Bologna (IT); TURA, Dante, I-40132 Bologna (IT)
(74) Representative: D'Agostini, Giovanni, Dr.
(86) International application number: IT8800039
(87) International publication number: WO8905035

(56) References cited:
- FR-A- 2 051 787
- GB-A- 2 137 427
- US-A- 3 041 562

## Description

The subject of the present invention is a wound capacitor device with controlled impedance.

This invention has a particular and convenient, although not exclusive, application in all sectors where the maximum miniaturization of inductors is desired and where its use is necessary in series of capacitor means. A main apparatus realizable with this device is an ignition system with capacitor integrated in the inductor.

It results necessary in the present state of art to utilize two separate devices, respectively, all inductor and a capacitor or viceversa to be connected in series.

The above involves the impossibility of being able to noticeably reduce both the overall dimensions and the costs above the limit deriving from manufacturing each device separately.

The main scope of the present invention is to eliminate the abovementioned inconveniences.

Further, in ignition systems, in addition to an inductor in a respective induction coil, it results necessary to use a capacitor to accumulate the necessary discharge energy, elements which are well-known to be constituted of two devices which are distinctly separate.

A further scope of this invention is to provide for the integration of these two devices in a sole device, having the inductance and capacitance inserted directly in the inductor coil and, therefore, without the necessity of a separate capacitor in the respective ignition circuit.

Wound capacitor-impedance as integrated devices is disclosed is disclosed in GB-A-2137427, including two metallic conductor sheets, separated and electrically insulated from each other by dielectric strips, the first conductive foil heing connected on one side with two opposed electrical conductors and the second provided analogously with two spaced apart connections, this device being utilized in combination with an inductive output (inducted) coil placed inside it.
The use and operating system of this device is disclosed in the respective drawings and specification of GB-A-2137427.
In particular the following characteristics are relevant:
- the capacitor-impedance is placed exteriorly to the inducted coil.
- the respective terminals to be utilized for working ar only one of one conductive foil (T1) and the other of the other insulated conductive foil.

The solution to the problem is produced by the following considerations:
- it is known that a capacitor always has combined leaks from the inductor and the resistance,
- the inductor is in function of the geometry and length of the armatures
- the resistance is in function of the materials: thickness, surfaces, dielectric,
- the capacity is in function of the dielectric and of the armature surfaces,
- the immediate consequence is that it has always been necessary to try and eliminate, or reduce as much as possible, the respective leaks (e.g. by introducing the system having metallized or short-circuited winding heads by the armature projection; by use of multiple output terminals on said armature, central outputs, etc.).

Surprisingly enough, it ha been found that this tendency to improve the capacitors' efficiency obstructed the way for an invention to solve the above-mentioned problems. The way taken to arrive at the present result has been the exact opposite, that is to say, working on the structuration of one of these elements, in this specific case, the capacitor, so as to vary its form and give it the possibility to also supply other performances by working on the geometry and on its structure so as to magnify the leaks up to the point of getting them under control.

The present invention, according to the characteristics given in the attached claims, intends reaching the cited purposes and others, and solve the problems explained by means of a wound capacitor-inductor impedance device coaxially located within induction output winding means, to be utilized in an ignition circuit to generate sparks for an ignition system in internal combustion engines, said capacitive-inductor device being in the form of a coil, comprising two metallic conductor sheets or layers wound in a roll and being electrically insulated from each other, the sheets or layers having electric conductors, wherein:
- said electrical conductors are placed as follows:
   - a first conductor is placed at one extremity of one of said metallic conductor sheets or layers;
   - a second and a third conductor are placed at the diagonally opposed extremities of the other of said metallic conductor sheets or layers ;
   - the second and third conductor extending from axially opposite ends of the device and being connected to a generator whereby the second conductor is connected to the generator via the capacitive portion of said capacitive-inductor means and the first conductor,
      - and a diode being connected across said second and third conductors .

The dielectric insulating separator layers are also advantageously in 5-10 micron polypropylene sheet, while the conductor layers are in aluminium.

In practice, two or more metallic armatures are used which are not directly short-circuited, and which are separated by any type of dielectric.

In the preferential solution the dielectric insulating separator layers, the conductor ones wound in coil, are integrated by impregnation in epoxide resin.

The advantages obtained from these characteristics consist essentially in the fact that, in addition to combining the twin function of capacitor and inductor in a sole device and reducing both the total overall dimensions and the respective manufacturing costs, the respective impedance can be controlled.

In the realization of all ignition device, the whole ignition circuit is reduced in dimension, simplified in the number of component parts and realized at a considerably lower cost.

These and other advantages will appear in the following, detailed description of preferential realization solutions with, the help of the attached drawings, the execution details of which are not to be held as limiting but only as examples.

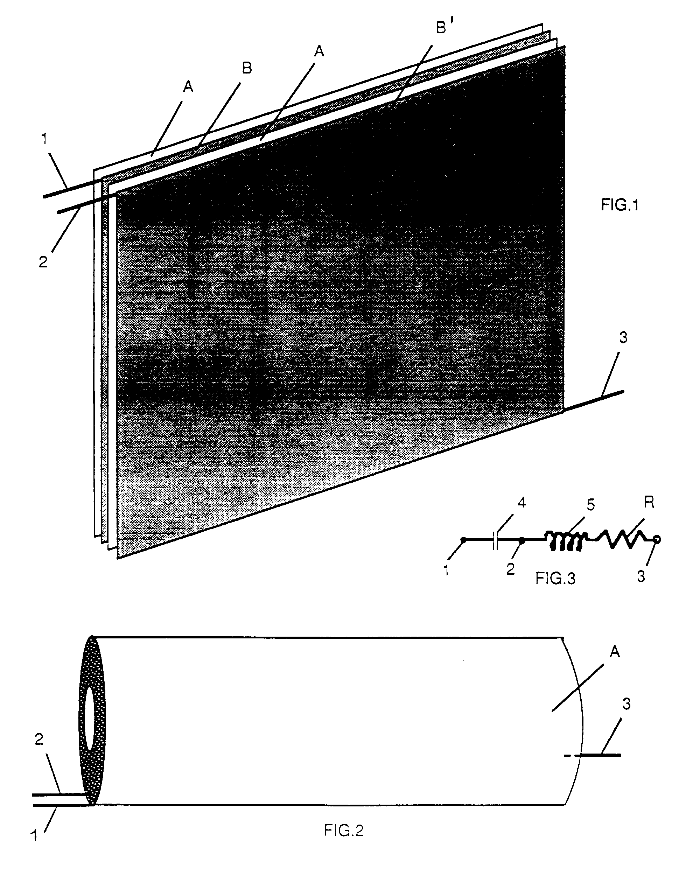

Figure 1 gives a schematic, front prospect of the sheets making up the device as per the invention in unwound condition.

Figure 2 gives a prospect of the finished device wound up in coil and ready for use.

Figure 3 gives a view of the equivalent electric scheme obtainable during operation of the device.

Figure 4 gives the electric scheme of all example of application which can be adopted in all ignition system for endothermic motors.

Figure 5 gives a schematic, cross-section of the coil which transforms the current from low voltage to high voltage, realized with the inductor device as per the present invention with capacitive-inductor means placed inside the inducted wound.

With reference to the figures, it can be seen that the capacitive-inductor means of the device is realized by winding at least two metallic conductor sheets or layers (B,B'), insulated by sheets or layers in dielectric insulating material (A), of which:
- at least one of said metallic conductor sheets or layers (B) presents a connection on one side with all electric conductor (1);
- at least one of said metallic conductor sheets or layers insulated from the previous one/s (B'), presents at least one connection with opposed electric conductor/s (3) so as to realize upon winding in coil:
   - a respective capacitor (4) from the first sheet (B);
   - a respective inductor (5) from the second sheet (B');
all of it being integrated in a sole wound device (coil).

Two opposed electric connections (2,3) are foreseen in the second sheet.

The dielectric insulating separator layers (A) are in 5-10 micron polypropylene sheet, but it is evident that they could also be in paper or other equivalent material.

The conductor layers (B,B') are in 99.9% pure aluminium, having 5-10 micron thickness, as for the dielectric layers.

The dielectric insulating separator layers (A) and the conductor ones (B,B') wound in coil, are integrated by impregnation in epoxide resin.

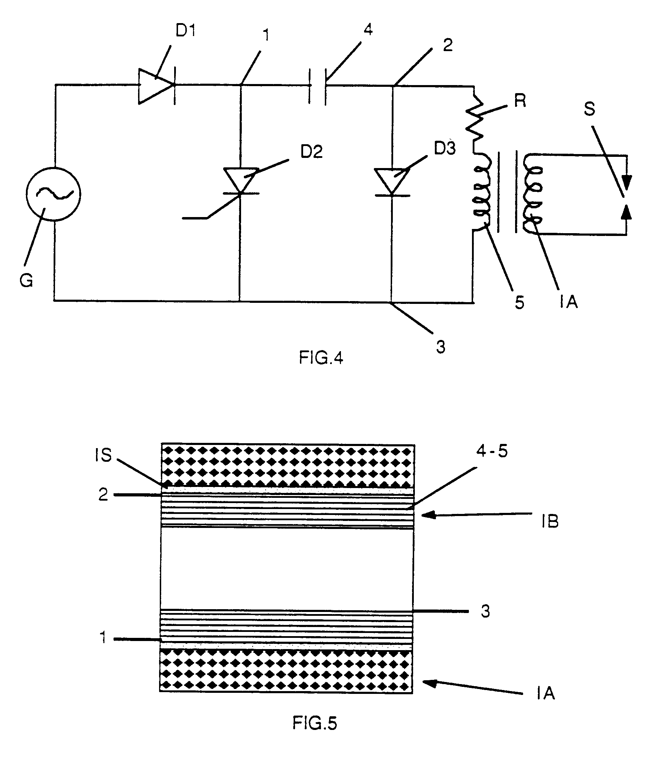

An electric scheme is therefore realized during operation which comprises the arrangement in series of a capacitor (4) and an inductive winding (5), all of it being on a sole coil ignition system (IB) which can be realized by coaxially applying all induced coil (IA), on the invention device (4-5) that has the integrated function of capacitance and inductance. (Figg. 4 and 5). In the Figure 4 the electrical scheme discloses the application of the invention in an ignition system where (10) indicates the respective generator, for example, at 200 V; (D1) indicates the respective charging diodes, (D2) the control grid diode, and (D3) the energy recovery diode.
The respective terminals (1,2,3) integrate the device, as per the present invention, which comprises the controlled impedance (4-5-R) where the inductive component induces a rise in voltage for discharge on the plug (S) by means of the corresponding external coaxial induced coil (IA).

In Figure 5 the induced coil is conveniently supported by means of a plastic reel (IS), and the whole device call be resinated with epoxide resin.

The solutions may naturally be varied in respect to the above, for example:
- by combining sheets of metallized plastic film with metallic conductor sheets;
- by combining several sheets of conductor (metallic) material with sheets of dielectric insulating (plastic) material and metallized sheets of dielectric insulating (plastic) material. Eg.: the first being a layer of metallized film (B), the second a sheet of aluminium (B') and so on, obviously insulated by insulating sheets;
- pairing sheets having different lengths and/or widths;
- combining these solutions with each other.

## Claims

1. Wound capacitor-inductor impedance device (IB), coaxially located within induction output winding means (IA), to be utilized in an ignition circuit to generate sparks for an ignition system in internal combustion engines, said capacitive-inductor device (IB) being in the form of a coil, comprising two metallic conductor sheets or layers (B,B') wound in a roll and being electrically insulated from each other, the sheets or layers (B,B') having electric conductors, wherein:
- said electrical conductors are placed as follows:
- a first conductor (1) is placed at one extremity of one of said metallic conductor sheets or layers (B);
- a second and a third conductor (2,3) are placed at the diagonally opposed extremities of the other of said metallic conductor sheets or layers (B');
- the second and third conductor (2-3) extending from axially opposite ends of the device and being connected to a generator (G) whereby the second conductor is connected to the generator (G) via the capacitive portion (4) of said capacitive-inductor means (IB) and the first conductor (1),
- and a diode (D3) being connected across said second and third conductors (2,3).

2. A device as per claim 1, characterized in that the ignition circuit (1,4,2,5,3) is closed by a charging diode (D1), having control grid diode bridges (D2) and said energy recovery diode (D3).

3. A device as per claim 1 characterized by the fact that:
- the induced coil (IA) is supported by means of a plastic reel (IS),
- the capacitive-inductor (IB) is placed inside said plastic reel (IS)
and
- the whole device is resinated with epoxide resin.

## Patentansprüche

1. Aufgewickeltes Kapazitätsbauelement mit kontrollierter Impedanz (IB), koaxial innerlich der Induktionsspule zur Leistungsabgabe (IA) angeordnet, das in einer Zündleitung verwendet wird, um Funken für eine Zündungssystem in Motoren mit Innenverbrennung zu erzeugen, wobei genanntes Kapazitätinduktorsbauelement (IB) auf eine Spule gewickelt ist, die zwei metallische Leitungsplatten- oder Schichten (B, B') enthält, die in einer Rolle aufgewickelt und miteinander elektrisch isoliert werden, wobei die Platten oder Schichten (B, B') Elektrizitätsleiter haben, wobei:
- genannte Elektrizitätsleiter wie nachfolgend beschrieben angeordnet werden :
- ein erster Leiter (1) wird auf einem Ende einer der genannten metallische Leitungsplatten- oder Schichten (B) angeordnet;
- ein zweiter und ein dritter Leiter (2, 3) werden auf den schräg entgegengesetzten Enden der anderen genannten metallische Leitungsplatte- oder Schichte (B') angeordnet;
- der zweite und der dritte sich aus den axial entgegengesetzten Enden des Bauelementes erstreckenden Leiter (2 -3) werden mit einem Generator (G) eingeschaltet , wobei der zweite Leiter mit einem Generator (G) über den Kondensatorsbereich (4) des genannten Kapazitätinduktorsbauelement (IB) und den ersten Leiter (1) eingeschaltet wird.
- und eine über die genannte zweite und dritte Leiter (2, 3) parallelgeschaltene Diode (D3).

2. Ein Bauelement wie gemäß Anspruch 1, dadurch gekennzeichnet, daß die Zündleitung (1, 4, 2, 5, 3) von einer Ladediode (D1) gesperrt wird, die Steuergitterdiodetibrücke (D2) und genannte Diode zur Energierückgewinnung (D3) hat.

3. Ein Bauelement wie gemäß Anspruch 1, dadurch gekennzeichnet, daß:
- die induktive Spule (1A) durch eine Plastikrolle (IS) unterstützt wird ,
- das Kapazitätinduktorsbauelement (IB) innerlich sogenannter Plastikrolle (IS) gesetzt wird ,
und
- das gesamte Bauelement mit Epoxidharz behandelt wird.

## Revendications

1. Dispositif à impédance avec condensateur-bobine (1B), coaxial du bobinage d'induction (1A), à utiliser dans un circuit d'allumage pour produire des étincelles dans une installation d'allumage de moteur à combustion interne, ledit condensateur-bobine (1B) ayant une forme de bobine comportant deux feuilles ou couches métalliques conductrices (B et B') enroulées sur un rouleau et isolées électriquement l'une de l'autre, les feuilles ou couches (B et B') comprenant des conducteurs électriques, dans lequel,
- lesdits conducteurs électriques sont disposés comme suit :
- un primier conducteur (1) est placé à une extrémité de l'une desdites feuilles ou couches métalliques conductrices (B);
- un deuxième et un troisième conducteurs (2 et 3) sont placés aux extrémités diamétralement opposées de l'autre feuille ou couche métallique conductrice;
- le deuxième et le troisième conducteurs (2 et 3) partent d'extrémités diamétralement opposées du dispositif et sont reliés à un générateur (G), le deuxième conducteur étant relié au générateur (G) par la partie condensateur (4) dudit condensateur-bobine (IB) et par le premier conducteur (1);
- une diode (D3) est reliée aux deuixème et troisième conducteurs (2 et 3).

2. Dispositif selon la revendication 1, caractérisé par le fait que le circuit d'allumage (1, 4, 2, 5, 3) est fermé par une diode de charge (D1), comportant des ponts avec diodes à grille de commande (D2) et ladite diode à récupération d'énergie (D3).

3. Un dispositif selon la revendication 1, caractérisé par le fait:
- que le bobinage d'induction (1A) est supporté par une bobine en plastique (IS) ;
- que le condensateur-bobine (1B) est placé à l'intérieur de ladite bobine en plastique (IS) ;
- et que l'ensemble du dispositif est enduit de résine époxy.
